# EUROPEAN PATENT SPECIFICATION

(11) **EP 3 659 434 B1**
(45) Date of publication and mention of the grant of the patent: **15.05.2024**
(21) Application number: 17919306.5
(22) Date of filing: 20.11.2017
(51) Int. Cl.: A01K 1/01

(54) **ANIMAL LITTER BOX**
TIERSTREUBEHÄLTER
BAC À LITIÈRE POUR ANIMAUX

(30) Priority: 28.07.2017 JP 2017146729
(43) Date of publication of application: 03.06.2020
(73) Proprietor: Unicharm Corporation, Shikokuchuo-shi, Ehime 799-0111 (JP)
(72) Inventor: TAKAI, Chiyo, Kanonji-shi, Kagawa 769-1602 (JP); KANEKO, Shinya, Kanonji-shi, Kagawa 769-1602 (JP)
(74) Representative: Staeger & Sperling Partnerschaftsgesellschaft mbB
(86) International application number: PCT/JP2017/041655
(87) International publication number: WO 2019/021504

(56) References cited:
- WO-A1-2013/078353
- FR-A2- 2 456 471
- JP-A- S61 146 134
- JP-A- S61 146 134
- JP-A- 2002 078 428
- JP-A- 2002 078 428
- JP-A- 2012 509 057
- JP-A- 2013 202 028
- US-A1- 2006 032 452
- US-B2- 7 849 818

## Description

### [Technical Field]

The present invention relates to an animal litter box.

### [Background Art]

An animal litter box (e.g., for cats) has been conventionally known. For example, PTL 1 discloses the following animal litter box: a cover part is installed above its main body, the four sides thereof are surrounded by walls, and the cover part has a cutout in a part of one of the walls, the cutout serving as an entrance/exit through which an animal enters/exits the toilet. Further prior art I this technical field is disclosed in documents JP S61 146134 A, JP 2002 078428 A, FR 2456471 A2, US 7,849,818 B2, WO 2013/078353 A1 and US 2006/032452 A1 .

### [Citation List]

### [Patent Literature]

[PTL 1] Japanese Patent Application Publication No. 2008-148603

### [Summary of Invention]

### [Technical Problem]

In such an animal litter box, since the peripheries of the cover part excluding the entrance/exit are surrounded by the walls, it is possible for the animal to safely discharge excrement when the animal has entered the toilet, without being alert its surrounding. However, when the animal discharges the excrement by orienting its excretory opening on the entrance/exit side, the excrement (e.g., feces or urine) leaks from the entrance/exit, and may thus soil the toilet surroundings.

The present invention was achieved in light of conventional problems such as that described above, and an aspect of the present invention is to provide an animal litter box that makes less likely for excrement to leak from an entrance/exit.

### [Solution to Problem]

A main aspect of the present invention for achieving the above-described aspect is an animal litter box having a front-back direction, a left-right direction, and a height direction,
the animal litter box including:
a main body part that receives excrement of an animal; and
a cover part that is removably mounted to an upper portion of the main body part,
   the cover part including wall parts on front-back-direction sides and on left-right-direction sides,
   the cover part having an open top at a ceiling,
   the cover part having a cutout in at least one location in the wall parts provided on front-back-direction sides and on left-right-direction sides,
   the cutout serving as an entrance/exit when the animal enters or exits the animal litter box,
   the cover part including an extending bottom part that extends inward with respect to the wall part, from a lower end portion of the cutout.

Features of the present invention other than the above will become clear by reading the description of the present specification with reference to the accompanying drawings.

### [Advantageous Effects of Invention]

According to the present invention, it is possible to provide an animal litter box that makes less likely for excrement to leak from an entrance/exit.

### [Brief Description of the Drawings]

[FIG. 1] FIG. 1 is a schematic perspective view of an animal litter box 1.
[FIG. 2] FIG. 2 is a plan view of the animal litter box 1 when seen from the upper side in the height direction and from the front side in the front-back direction.
[FIG. 3] FIG. 3 is a cross-sectional view taken along line A-A in FIG. 2.
[FIG. 4] FIG. 4 is a schematic perspective view of a cover part 20.
[FIG. 5] FIG. 5 is a plan view of the cover part 20 when seen from above and from front.
[FIG. 6] FIG. 6A is a cross-sectional view taken along line B-B in FIG. 5. FIG. 6B is a cross-sectional view taken along line C-C in FIG. 5.
[FIG. 7] FIG. 7 is a diagram illustrating a state in which an animal discharges excrement in an animal litter box 2 according to a comparative example.
[FIG. 8] FIG. 8 is a diagram illustrating a state in which an animal discharges excrement in the animal litter box 1.
[FIG. 9] FIG. 9 is an enlarged cross-sectional view of a region D of FIG. 6B.
[FIG. 10] FIG. 10A is an enlarged view of a region E1 of FIG. 6A. FIG. 10B is an enlarged view of a region E2 of FIG. 6B.
[FIG. 11] FIG. 11 is a diagram illustrating an animal litter box 3 (modified example) having a cutout 25 in a right wall part 21r.

### [Description of Embodiments]

At least the following matters will become clear with the description of this specification and the attached drawings.

An animal litter box having a front-back direction, a left-right direction, and a height direction, the animal litter box including:
a main body part that receives excrement of an animal; and
a cover part that is removably mounted to an upper portion of the main body part,
   the cover part including wall parts on front-back-direction sides and on left-right-direction sides,
   the cover part having an open top at a ceiling,
   the cover part having a cutout in at least one location in the wall parts provided on front-back-direction sides and on left-right-direction sides,
   the cutout serving as an entrance/exit when the animal enters or exits the animal litter box,
   the cover part including an extending bottom part that extends inward with respect to the wall part, from a lower end portion of the cutout.

According to such an animal litter box, the extending bottom part extending inward from the cutout which is the entrance/exit makes it easier to guide an animal to a position situated away from a wall part (that is, toward a far side of the toilet) when the animal enters the toilet. Therefore, inside the animal litter box, the excretory opening of the animal is not easily positioned outside beyond the wall part, making it less likely for excrement to leak from the cutout (the entrance/exit).

In such an animal litter box, it is according to the invention that
the extending bottom part is inclined obliquely downward from an outer side to an inner side of the wall part.

According to such an animal litter box, even if excrement such as urine is discharged to an upper surface of the extending bottom part, the excrement moves along an inclination of the extending bottom part toward an inner side of the main body part and falls into the main body. This makes it easier to further suppress leakage of the excrement from the cutout (the entrance/exit).

In such an animal litter box, it is according to the invention that
the extending bottom part includes a bent part at an extending end extending toward the inner side,
the bent part being bent downward in the height direction.

According to such an animal litter box, when excrement (e.g., urine) is discharged to the upper surface of the extending bottom part and moves along an inclined surface of the extending bottom part, the excrement easily falls quickly downward (toward the inside of the animal litter box) along the bent part without accumulating in the vicinity of the extending end. Therefore, the excrement does not easily leak from the animal litter box and soiling of a surface of the extending bottom part can be suppressed from occurring.

In such an animal litter box, it is desirable that
the cover part includes extending side parts that extend inward with respect to the wall part, from two left-right-direction ends of the cutout.

According to such an animal litter box, when the animal enters the animal litter box, the animal easily advances to a position situated away from the cutout (the wall part) in correspondence with the amount of inward extension of the extending side parts. Since two sides of the extending bottom part are supported by the extending side parts, the strength of the extending bottom part can be higher than in the case where the two sides of the extending bottom part are not provided with extending side parts. Therefore, when the animal enters the animal litter box, even if the weight of the animal is exerted upon the extending bottom part, the extending bottom part is not easily flexed or damaged, and the animal can more safely use the toilet.

In such an animal litter box, it is desirable that
a width of each of the extending side parts is larger toward a lower side in the height direction.

According to such an animal litter box, by causing the area of each extending side part at a height at which the head passes to be as narrow as possible, it becomes less likely for the animal to bump its head when the animal enters the animal litter box, and this makes it possible to prevent the animal from feeling pressure. On the other hand, by causing the area of each extending side part at a height at which the legs or torso passes to be as wide as possible, it becomes less likely for the extending side parts to be damaged even if, for example, the legs of the animal come into contact with the extending side parts when the animal enters the animal litter box. This can make it less likely for the body of the animal to be injured.

In such an animal litter box, it is desirable that
each wall part includes a reverse part that extends inward with respect to the wall part from a corresponding upper end in the height direction.

According to such an animal litter box, even if the animal that has discharged excrement into the toilet paws particles (e.g., cat sand) after discharging the excrement, the scattered particles collide with the reverse parts at upper end portions of the wall parts, and easily fall toward the inner side of the toilet. Therefore, it is possible to suppress the particles from moving over the upper ends of the wall parts and from flying out.

In such an animal litter box, it is desirable
that a length of the cover part in the front-back direction is longer than a length of the cover part in the left-right direction, and
that the cutout is provided in the wall part disposed on a front side or a back side in the front-back direction.

According to such an animal litter box, since the cutout, which is the entrance/exit, is provided in a portion of a short side of a rectangle, the animal can easily enter or exit the animal litter box in the front-back direction.

In such an animal litter box, it is desirable
that a length of the cover part in the front-back direction is longer than a length of the cover part in the left-right direction, and
that the cutout is provided in the wall part disposed on a right side or a left side in the left-right direction.

According to such an animal litter box, the animal can discharge excrement in a region that is wide in a long-side direction, and when discharging the excrement, can also avoid a place where the animal has already discharged the excrement and select a clean place where the animal has not yet discharged excrement. Therefore, the animal can easily discharge excrement without feeling stressed.

In such an animal litter box, it is desirable that
in the front-back direction, a location of a center of the cutout is decentered forward or backward of a location of a center of the animal litter box.

According to such an animal litter box, the animal litter box is separated into the following two places: a place situated in the vicinity of the entrance (the cutout) where excrement can be easily discharged; and a place situated away from the entrance where excrement cannot be easily discharged. This makes it easier for the two regions to be used in this order. Therefore, the animal litter box is easily used efficiently over a wide range.

In such an animal litter box, it is desirable that
in the front-back direction, a maximum value of a width of the cutout is 1/2 or less of a maximum value of a width of the wall part where the cutout is provided.

According to such an animal litter box, of the wall parts that are elongated in the longitudinal direction, the location to which the animal advances into the toilet is easily limited to a desired location. Therefore, it is possible to easily control a place in the vicinity of the entrance in the longitudinal direction where excrement is easily discharged and a place situated away from the entrance in the longitudinal direction where excrement is not easily discharged, and the entire region of the animal litter box can be efficiently used.

In such an animal litter box, it is desirable that
an extension length from a lower end of the cutout to an extending end of the extending bottom part is between 1 cm to 10 cm (both inclusive).

According to such an animal litter box, setting the extension length to be greater than or equal to 1 cm makes it easier to realize satisfactorily the effect of guiding the animal to the far side of the toilet in the front-back direction. Setting the extension length to be less than or equal to 10 cm makes it easier to suppress the animal from feeling stressed or from feeling hesitant to use the animal litter box, which are caused by narrow space where the animal discharges excrement inside the toilet. Therefore, the animal can easily discharge the excrement at a proper location inside the animal litter box without feeling stressed.

In such an animal litter box, it is desirable
that the extending bottom part is inclined obliquely downward from an outer side to an inner side of the wall part, and
that, of angles that a straight line connecting a lower end of the cutout and an extending end of the extending bottom part form with a horizontal plane, a smaller angle is between 5 degrees and 45 degrees (both inclusive).

According to such an animal litter box, by causing the inclination angle to be greater than or equal to 5 degrees, excrement (e.g., urine) discharged to the upper surface of the extending bottom part easily flows and is easily suppressed from accumulating. If the inclination angle is set less than or equal to 45 degrees, the animal's legs do not easily slip when the animal places its legs on the extending bottom part to enter the animal litter box. Therefore, while ensuring safety, it is possible to suppress accumulation of the excrement at the extending bottom part and to easily keep the animal litter box clean.

### Embodiments

### Overall Structure

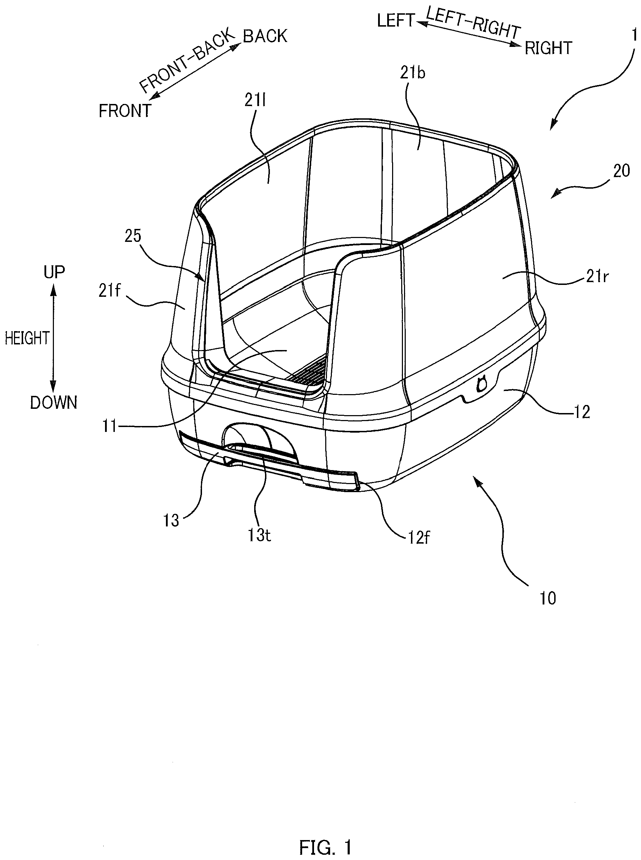

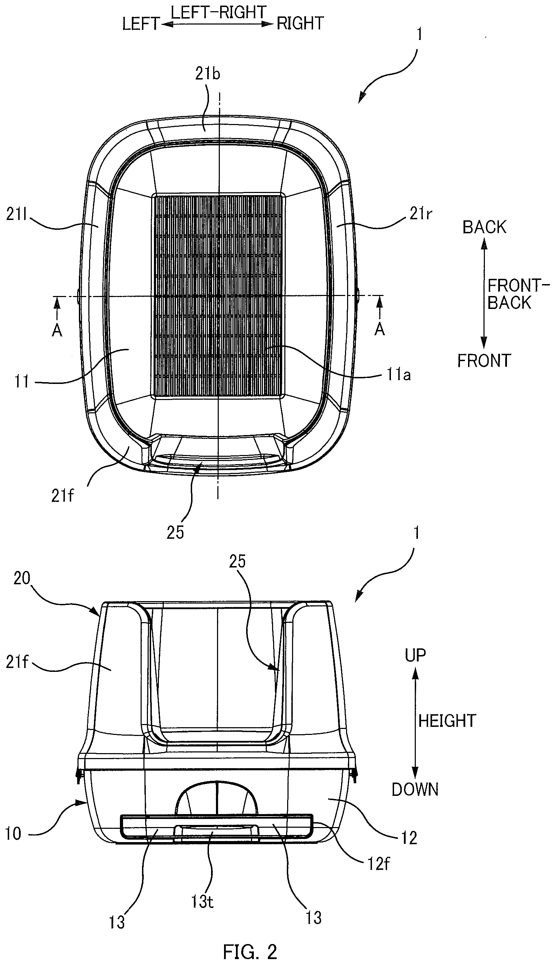

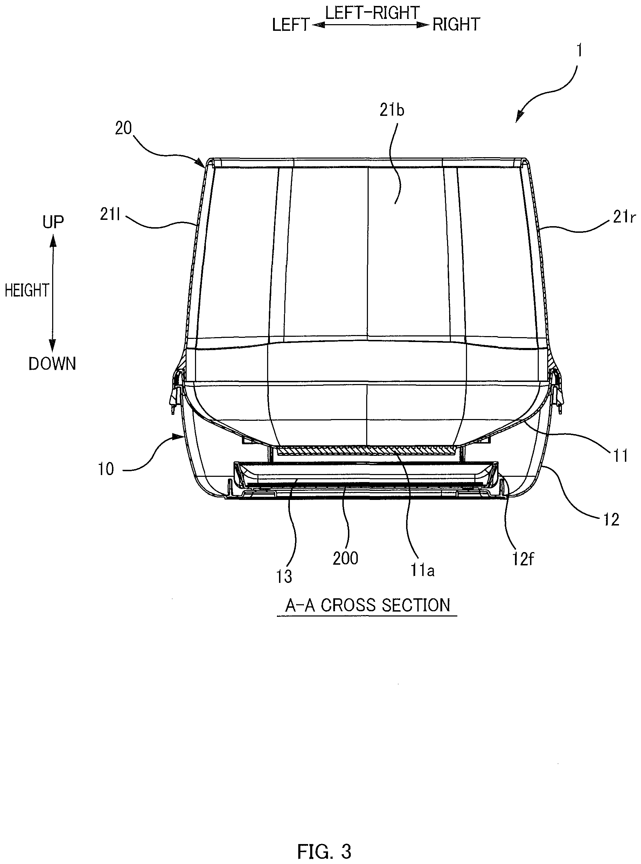

As an example of an animal litter box according to the present embodiment, an animal litter box 1 is described. FIG. 1 is a schematic perspective view of the animal litter box 1. FIG. 2 is a plan view of the animal litter box 1 when seen from the upper side in the height direction and from the front side in the front-back direction. FIG. 3 is a cross-sectional view taken along line A-A in FIG. 2. In the description below, as shown in FIG. 1, the "front-back direction", the "left-right direction", and the "height direction", which are three directions perpendicular to each other, are defined. In FIG. 1, the "front-back direction" is a direction in the longitudinal direction of the animal litter box 1, and the side where an entrance/exit for an animal is provided is the front side. The "left-right direction" is a direction in the width direction of the animal litter box 1. The "height direction" is a direction in the vertical direction.

The animal litter box 1 includes a main body part 10 that receives excrement of an animal and a cover part 20 that is removably mounted to the upper portion of the main body part 10 in the height direction. The details of the cover part 20 are described later.

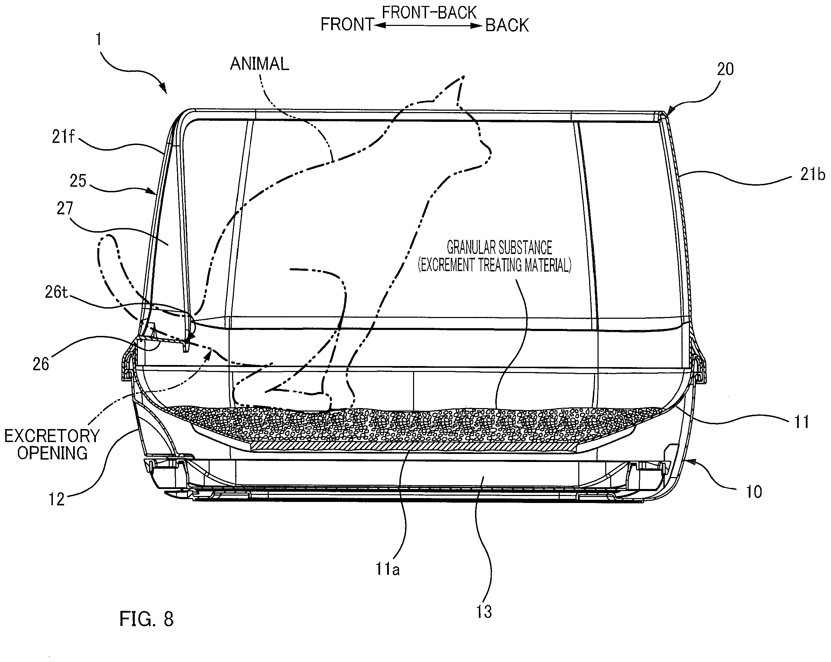

The main body part 10 includes an upper container 11, a lower container 12, and a tray 13. The upper container 11 is a box-shaped member having an open top. An animal (e.g., a cat) is on a bottom surface of the upper container 11 (corresponding to an inner side of the box) when it discharges excrement (see FIG. 8). The main body part 10 of the present embodiment when seen from above has a longitudinally-elongated rectangular shape whose length in the front-back direction is longer than its length in the left-right direction as shown in FIG. 2, but the shape is not limited thereto. As shown in FIG. 3, the bottom surface of the upper container 11 is inclined in a bowl-shaped manner, from an outer side to the inner side (toward center) in a lateral direction (and the front-back direction). In its bottom portion located at the lowest position in the height direction, provided is a urine passage part 11a through which urine or the like discharged by the animal pass from the upper side to the lower side in the height direction. The urine passage part 11a has a plurality of holes extending therethrough in the height direction, and the discharged urine passes through the holes and moves from an upper side toward the lower side of the upper container 11 (toward the lower container 12 side).

In using the animal litter box 1, an excrement treating material which is granular (e.g., cat sand) is disposed on an upper surface of the urine passage part 11a, and an animal such as a cat discharges excrement onto the excrement treating material (see FIG. 8, for example) . The excrement treating material used in the animal litter box 1 is a granular substance having a porous structure, such as zeolite or silica gel. When the excrement treating material comes into contact with the urine or the like discharged from the animal, the excrement treating material provides the effect of absorbing an ammonia component and deodorizing the animal litter box 1 and the effect of dehumidifying the animal litter box 1. In order to suppress each particle of the excrement treating material from falling from the holes of the urine passage part 11a, it is desirable that each hole of the urine passage part 11a have a shape and a size that do not allow the excrement treating material to pass through the holes of the urine passage part 11a while allowing the urine to pass through the holes of the urine passage part 11a. For example, in the animal litter box 1 of the present embodiment, the urine passage part 11a is formed by providing a plurality of slit-like holes elongated in the front-back direction as shown in FIG. 2.

The lower container 12 is a box-shaped member having an open top, and, as shown in FIG. 3, is stacked upon and assembled onto the lower portion of the upper container 11. A tray accommodating part 12f that accommodates the tray 13 is provided in the lower container 12. In the animal litter box 1 of the present embodiment, the tray accommodating part 12f has an opening in the lower portion of the lower container 12 on the front side in the front-back direction, and is capable of accommodating the tray 13 inside the lower container 12 from the opening.

The tray 13 is a flat box-shaped container having a shallow bottom where an absorbent body (such as an absorbent body 200 described below) that absorbs discharged urine or the like is installed. In the present embodiment, the tray 13 is formed in a rectangular shape that is symmetrical in the front-back direction. Two gripping parts 13t are respectively provided on the front-back-direction end portions of the tray 13. When the tray 13 is to be accommodated in the lower container 12 or is to be drawn out from the lower container 12, gripping and manipulating the gripping parts 13t makes it possible to slide the tray 13 in the front-back direction. As described above, since the tray 13 of the present embodiment has a symmetrical shape in the front-back direction, the tray 13 can be accommodated in the lower container 12 even if transposing front and back portions of the tray 13.

The absorbent body 200 that is installed inside the tray 13 is a liquid-absorbent sheet member that absorbs urine discharged from an animal such as a cat, and is made of a liquid-absorbent material such as pulp fiber or a super absorbent polymer. The absorbent body 200 may contain a deodorizing microcapsule or an antibacterial agent to prevent multiplication of bacteria while confining the smell of the absorbed urine. In using the animal litter box 1, when the tray 13 in which the absorbent body 200 is installed is accommodated in the tray accommodating part 12f of the lower container 12, the absorbent body 200 is disposed below the urine passage part 11a in the height direction (see FIG. 3). Excrement discharged by the animal (e.g., a cat) in the upper container 11 passes through the urine passage part 11a, moves downward (falls), and is absorbed by the absorbent body 200.

### Cover Part 20

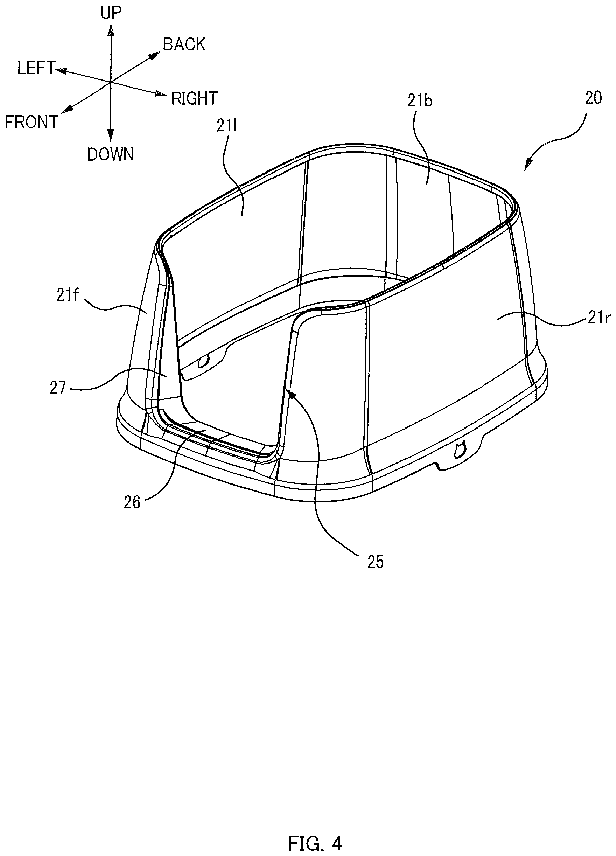

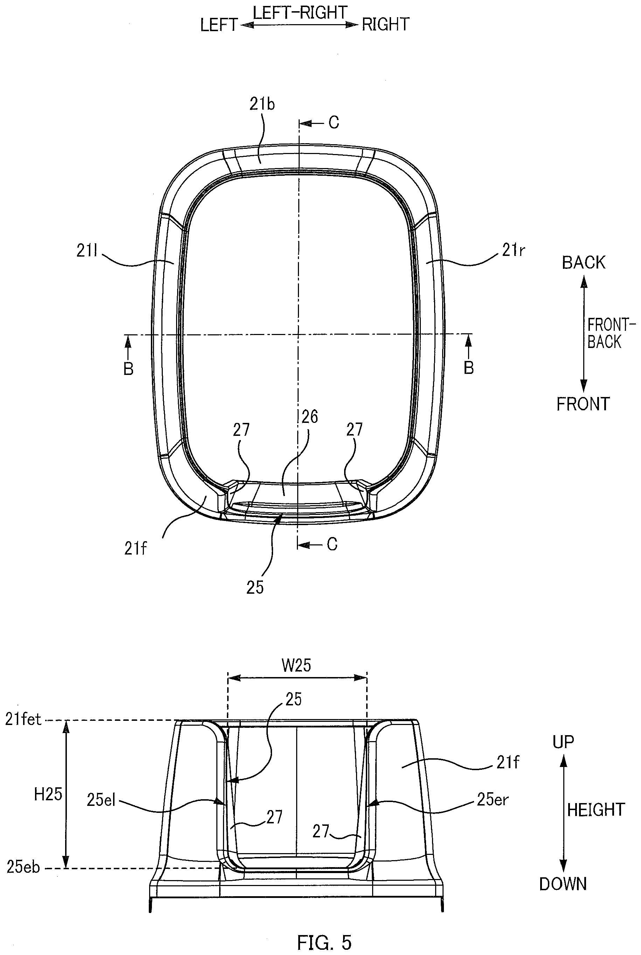

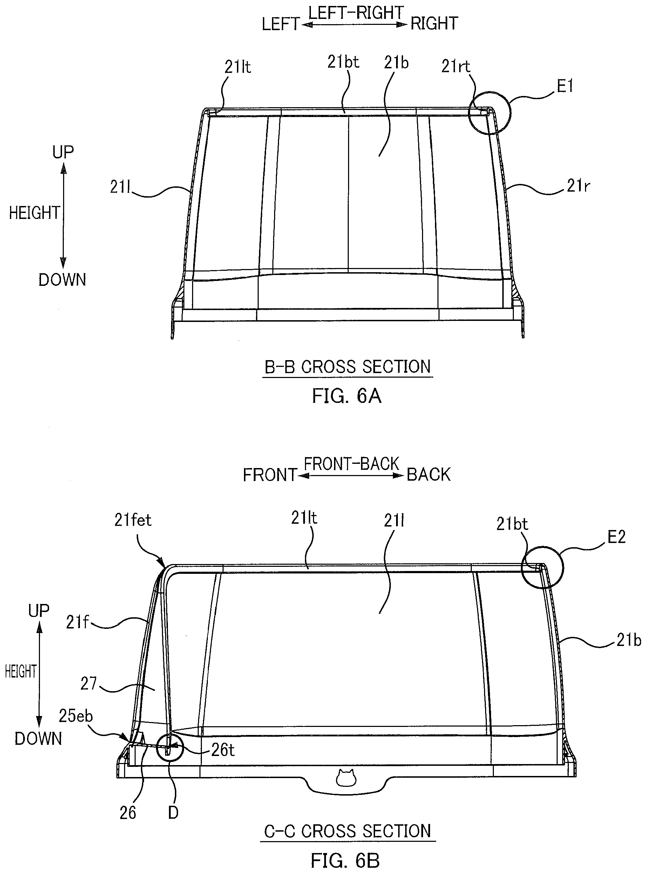

FIG. 4 is a schematic perspective view of the cover part 20. FIG. 5 is a plan view of the cover part 20 when seen from above and front. FIG. 6A is a cross-sectional view taken along line B-B in FIG. 5. FIG. 6B is a cross-sectional view taken along line C-C in FIG. 5.

The cover part 20 includes wall parts 21 on the four sides in the front-back direction and the left-right direction. Specifically, the cover part 20 includes a front wall part 21f on the front side and a back wall part 21b on the back side in the front-back direction, and also includes a right wall part 21r on the right side and a left wall part 211 on the left side in the left-right direction. And, the cover part 20 does have an open top at its ceiling (upper side in the height direction). The height of each wall part 21 is adjusted to the following height: an animal (e.g., a cat) which enters the animal litter box 1 can sufficiently obscure its body; and the animal can check the outside of the animal litter box 1 by moving its head (eyes) above any wall part 21 when necessary.

The wall parts 21f, 21b, 21r, and 211 are respectively disposed so as to be inclined inward in the front-back direction and the left-right direction. That is, each wall part 21 is disposed extending from the lower side to the upper side in the height direction so as to be inclined from the outer side toward the inner side in the front-back direction or the left-right direction. Accordingly, the front-back-direction distance between the front wall part 21f and the back wall part 21b becomes narrower toward the upper side (see FIG. 6B), and the left-right-direction distance between the right wall part 21r and the left wall part 21l is narrower toward the upper side (see FIG. 6A). Consequently, the cover part 20 has a structure which slightly narrows toward an opening at its ceiling, making it possible to efficiently suppress the excrement treating material (such as cat sand) or excrement from being scattered out of the animal litter box 1.

The cover part 20 has a cutout 25 in at least one location in the wall parts 21 provided on the four sides, the cutout 25 serving as an entrance/exit when an animal enters or exits the animal litter box 1. In the present embodiment, the cutout 25 is formed in a portion of the front wall part 21f on the front side in the front-back direction, and allows the animal such as a cat to enter or exit the animal litter box 1 from the cutout 25. Since the animal litter box 1 is longer in length in the front-back direction than in the left-right direction as shown in FIG. 1, the cutout 25 which is the entrance/exit provided in a short side of the rectangle makes it easier for the animal such as a cat to enter or exit the animal litter box 1 in the front-back direction.

It is desirable that the cutout 25 be formed from the upper end of the front wall part 21f to a substantially lower end of the front wall part 21f in the height direction. In FIG. 5, the length (the height) from an upper end 21fet of the front wall part 21f to a lower end 25eb of the cutout 25 is denoted by H25. Setting the length H25 to be as long as possible makes it possible to reduce the height of the entrance/exit (that is, the height of the lower end 25eb of the cutout 25). Accordingly, the legs of an animal that enters or exits the animal litter box 1 are not easily caught. On the other hand, the cutout 25 is formed so as to have a predetermined lateral width and so that its center position is in accordance with the lateral center position of the animal litter box 1. In FIG. 5, the left-right-direction length (width) W25 between the right end 25er and the left end 25el of the cutout 25 is substantially constant, but the width W25 on the upper side may differ from the width W25 on the lower side in the height direction. For example, if the width W25 at the upper end 21fet on the upper side in the height direction is wider than the width W25 at the lower end 25eb on the lower side in the height direction, it is possible to make it less likely for the torso of an animal to become caught in the cutout 25 when the animal enters or exits the animal litter box 1.

The cutout 25 is provided with portions extending inward from its peripheral edge. That is, as shown in FIG. 6B, the cutout 25 has an extending bottom part 26 extending from a lower end portion of the cutout 25 (the lower end 25eb in the present embodiment) toward the inner side in the front-back direction (from the front side toward the back side in FIG. 6B). Similarly, the cutout 25 is provided with extending side parts 27 and 27 extending inward in the front-back direction from the right end 25er and the left end 25el of the cutout 25, respectively. In the animal litter box 1, the foregoing extending bottom part 26 provided in the cutout 25 which serves as the entrance/exit makes it easier to suppress leakage of excrement from the entrance/exit when the animal such as a cat discharges the excrement.

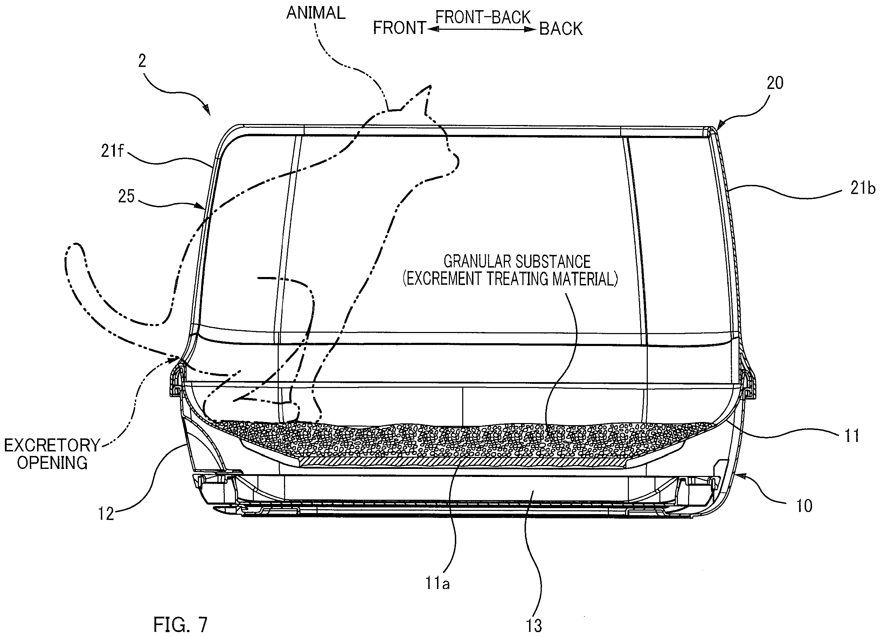

FIG. 7 is a diagram illustrating a state in which an animal discharges excrement in an animal litter box 2 according to a comparative example. FIG. 8 is a diagram illustrating a state in which an animal discharges excrement in the animal litter box 1, according to the invention. FIGS. 7 and 8 both illustrate cross-sections of the animal litter box taken at the center position in the left-right direction.

In the animal litter box 2 of the comparative example shown in FIG. 7, the cutout 25 which is the entrance/exit does not have extending portions. That is, the animal litter box 2 does not include parts corresponding to the extending bottom part 26 and the extending side parts 27 of the animal litter box 1 of the present embodiment. The other structures are substantially the same as the structures of the animal litter box 1. When an animal such as a cat uses the foregoing animal litter box 2 to discharge excrement, the animal that has entered the animal litter box 2 from the cutout 25 (the entrance/exit) may start discharging excrement while facing backward in the front-back direction without advancing toward the far side. That is, as shown in FIG. 7, the animal may discharge the excrement at a position immediately near the front wall part 21f where the cutout 25 is provided. In this case, even if both legs of the animal are positioned inside the animal litter box 2, its excretory opening is positioned beyond outside the front wall part 21f, causing a risk that the excrement such as feces or urine fall out of or get scattered out of the animal litter box 2. In particular, in the case of a kitten that is not sufficiently trained to use the animal litter box or an old cat whose legs are weak, when it discharges excrement, the excrement easily leaks from the animal litter.

In contrast, since the animal litter box 1 of the present embodiment has the extending bottom part 26, the positions of the hind legs of the animal inside the toilet are located inside an extending end 26t, which is an inner end of the extending bottom part 26 in the front-back direction, as shown in FIG. 8. That is, when the animal enters the animal litter box 1, the animal advances up to a position situated away from the cutout 25 (the front wall part 21f) in correspondence with the amount of inward extension of the extending bottom part 26. When the animal enters the animal litter box 1 through the cutout 25 (the entrance/exit), the extending bottom part 26 extending inward from the lower end 25eb of the entrance/exit functions like a footboard and makes it easier for the animal to advance into the toilet. For example, when the animal enters the animal litter box 1 from the entrance/exit, the animal can comfortably move onto cat sand (excrement treating material) after temporarily putting its legs on the extending end 26t. That is, the extending bottom part 26 becomes a foothold, and the animal is safely guided to the urine passage part 11a where the excrement treating material is placed.

Therefore, compared to the state in FIG. 7, the animal that has entered the animal litter box 1 from the cutout 25 (the entrance/exit) is allowed to discharge the excrement after advancing close to the far side (the back side in the front-back direction) of the toilet. Therefore, the excretory opening is not easily positioned outside beyond the front wall part 21f, suppressing leakage of the excrement from the cutout 25 (the entrance/exit).

In the animal litter box 1, it is desirable that the distance in the front-back direction between the lower end 25eb of the cutout 25 and the extending end 26t of the extending bottom part 26 (that is, the extension length of the extending bottom part 26 in the front-back direction) is within the range from 1 cm to 10 cm (both inclusive). If the extension length is less than 1 cm, it becomes difficult to sufficiently realize the effect of guiding the animal to the far side of the toilet in the front-back direction. In addition, there is also a risk that, when a cat puts its legs (for example, its forelegs) on the extending bottom part 26 to enter the toilet, safety is less likely to be ensured because the short extension length of the extending bottom part 26 (that is, the narrow width in the front-back direction) makes it easier for the cat to lose its footing. On the other hand, that the extension length is longer than 10 cm makes narrow the space where the animal discharges excrement in the toilet, and as a result the animal may feel stressed or may not want to use the animal litter box 1. In contrast, when the extension length of the extending bottom part 26 is in the aforementioned range, the animal can be allowed to easily and safely discharge the excrement at a proper location inside the animal litter box 1 without feeling stressed.

However, in the state in FIG. 8, the animal may discharge the excrement onto the extending bottom part 26. In this case, for example, urine may move along an upper surface of the extending bottom part 26 and flow out of the cutout 25. Therefore, in the animal litter box 1, the extending bottom part 26 is disposed so as to be inclined obliquely downward from the outer side to the inner side of the wall part 21. In other words, the extending bottom part 26 is inclined obliquely downward, from the outer side to the inner side of the front wall part 21f in the front-back direction. And the position of the extending end 26t of the extending bottom part 26 is set lower in the height direction than the position of the lower end 25eb of the cutout 25 (see FIG. 6B and FIG. 8). In this way, by disposing the extending bottom part 26 so as to be inclined obliquely downward toward the inner side of the main body part 10, even if, for example, urine is discharged onto the upper surface of the extending bottom part 26, the excrement moves along the inclination of the extending bottom part 26 toward the inner side of the main body part 10 and falls into the main body part 10 (onto the excrement treating material) from the extending end 26t. This makes it easier to further suppress leakage of the excrement from the cutout 25 (the entrance/exit).

In the animal litter box 1, it is desirable that, of the angles that a straight line connecting the lower end 25eb of the cutout 25 and the extending end 26t of the extending bottom part 26 form with a horizontal plane (in the front-back direction in FIG. 6B), the smaller angle (that is, the inclination angle of the extending bottom part 26) be in the range of 5 degrees or greater and 45 degrees or less. If the inclination angle is less than 5 degrees, excrement (e.g., urine) discharged onto the upper surface of the extending bottom part 26 does not easily flow and easily accumulates on the upper surface of the extending bottom part 26. On the other hand, if the inclination angle is greater than 45 degrees, there is also a risk that, when the animal puts its legs on the extending bottom part 26 to enter the animal litter box 1, safety is impaired because the legs easily slip. In contrast, when the inclination angle is in the aforementioned range, while ensuring safety, it is possible to suppress accumulation of the excrement at the extending bottom part 26 and to easily keep the animal litter box 1 clean.

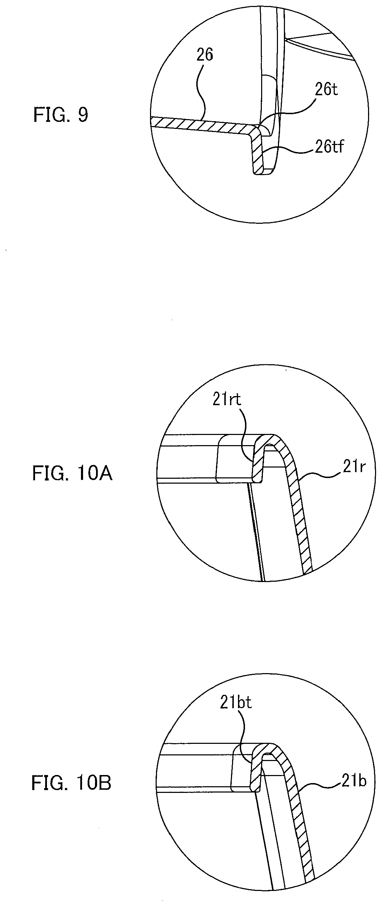

The extending bottom part 26 includes an extending-end bent part 26tf at the extending end 26t, the extending-end bent part 26tf being bent downward in the height direction. FIG. 9 is an enlarged cross-sectional view of a region D of FIG. 6B. In FIG. 9, the shape of a cross section made by cutting the extending bottom part 26 vertically in the front-back direction is indicated by oblique lines. As shown in FIG. 9, the extending bottom part 26 is bent downward at the extending end 26t in the height direction while being inclined obliquely downward from the outer side toward the inner side in the front-back direction, as a result of which the extending-end bent part 26tf is formed. Therefore, when excrement (e.g., urine) is discharged to the upper surface of the extending bottom part 26 and moves along an inclined surface of the extending bottom part 26, the excrement quickly falls downward (that is, falls into the main body part 10) along the extending-end bent part 26tf without accumulating in the vicinity of the extending end 26t. Consequently, the excrement does not easily leak from the animal litter box 1, and the surface of the extending end 26t is not easily soiled.

In general, animals, such as cats, often paw cat sand (a granular substance, such as an excrement treating material) with their legs after discharging excrement. In the animal litter box 2 of the comparative example shown in FIG. 7, when the animal paws the sand (the excrement treating material) with its hind legs, the pawed sand may be scattered out of the toilet from the entrance/exit (the cutout 25). In contrast, in the animal litter box 1 of the present embodiment, even if the animal paws the sand with its hind legs, scattering of the sand is stopped by the extending bottom part 26, as a result of which it is possible to suppress scattering of the sand out of the animal litter box 1. Further, by forming the extending-end bent part 26tf at the extending end 26t, it becomes easier to suppress scattering of the pawed sand to an upper-surface side of the extending bottom part 26 caused by the pawed sand moving beyond the extending end 26t from a lower-surface side of the extending bottom part 26.

On both the left and right sides of the cutout 25, the extending side parts 27 and 27 extending inward from the right end 25er and the left end 25el, respectively, are provided, and therefore, similarly to the extending bottom part 26, when an animal enters the animal litter box 1, the animal is easily guided to a position situated away from the cutout 25 (the front wall part 21f) in correspondence with the amount of inward extension of each extending side part 27. In the present embodiment, since two sides of the extending bottom part 26 are supported by the extending side parts 27, the strength of the extending bottom part 26 can be higher than when extending side parts 27 are not provided. Therefore, when the animal enters the animal litter box 1, even if the weight of the animal is exerted upon the extending bottom part 26, the extending bottom part 26 is not easily flexed or damaged, and a safe animal litter box 1 can be provided. Further, when the animal enters the animal litter box 1 via the cutout 25 (the entrance/exit), since the extending bottom part 26 and both extending side parts 27 and 27 extend in an advancing direction (that is, a direction of the inner side of the animal litter box 1), it is possible to naturally guide the animal in the advancing direction.

In the animal litter box 1, the length of inward extension of each extending side part 27 from a corresponding one of the right end 25er and the left end 25el is larger toward the lower side in the height direction (see, for example, FIG. 8). In other words, the width of each extending side part 27 in the front-back direction is narrower on the upper side than on the lower side in the height direction, and the width gradually widens from the upper end 21fet of the front wall part 21f toward the extending bottom part 26 on the lower side in the height direction.

A region in the vicinity of the upper end 21fet of the front wall part 21f is at a height at which the head passes when an animal such as a cat enters or exits the animal litter box 1. Therefore, by making the areas of the extending side parts 27 in this region as small as possible, it becomes less likely for the animal to bump its head when the animal enters or exits the animal litter box 1. This makes it possible to prevent the animal from being pressured. On the other hand, a region in the vicinity of the extending bottom part 26 is at a height at which the legs and torso passes when the animal such as a cat enters or exits the animal litter box 1. Therefore, by making each extending side part 27 in this region as wide a plane as possible, it becomes less likely to generate a localized pressure even if a large force acts due to the animal bumping, for example, its legs when the animal enters or exits the animal litter box 1. This can make it less likely for the extending side parts 27 to be damaged and for the animal's body to be injured. Consequently, the animal can safely and smoothly enter or exit the animal litter box 1.

The wall parts 21f, 21b, 21r, and 21l that are disposed on the four sides of the cover part 20 include a reverse part 21ft, a reverse part 21bt, a reverse part 21rt, and a reverse part 21lt, respectively, extending inward with respect to the respective wall parts 21 from corresponding upper ends. FIG. 10A is an enlarged view of a region E1 of FIG. 6A. FIG. 10B is an enlarged view of a region E2 of FIG. 6B. FIG. 10A shows the reverse part 21rt in which an upper end portion of the right wall part 21r is bent downward in the height direction while extending in the left-right direction toward the left side (that is, the inner side of the animal litter box 1). Similarly, FIG. 10B shows the reverse part 21bt in which an upper end portion of the back wall part 21b is bent downward in the height direction while extending in the front-back direction toward the front side (that is, the inner side of the animal litter box 1).

As described above, animals (e.g., cats) that have discharged excrement inside the animal litter box often paw cat sand (a granular substance, such as an excrement treating material) with their legs after discharging the excrement. In addition, when particle sizes of the excrement treating material are small or particles are light, the particles of the excrement treating material that has been pawed may fly out of the animal litter box due to the particles of the excrement treating material that has been pawed being largely scattered and moving over the upper ends of the wall parts. In contrast, in the animal litter box 1 of the present embodiment, as shown in FIGS. 10A and 10B, since the reverse parts (21rt, 21bt, etc.) extending inward from the upper ends of the respective wall parts 21 of the cover part 20 are provided, the scattered particles tend to fall toward the inner side of the toilet by colliding with the reverse parts. Therefore, it is possible to easily suppress the particles of the excrement treating material from moving over the upper ends of the wall parts 21 and from flying out to the outer side.

### Modified example

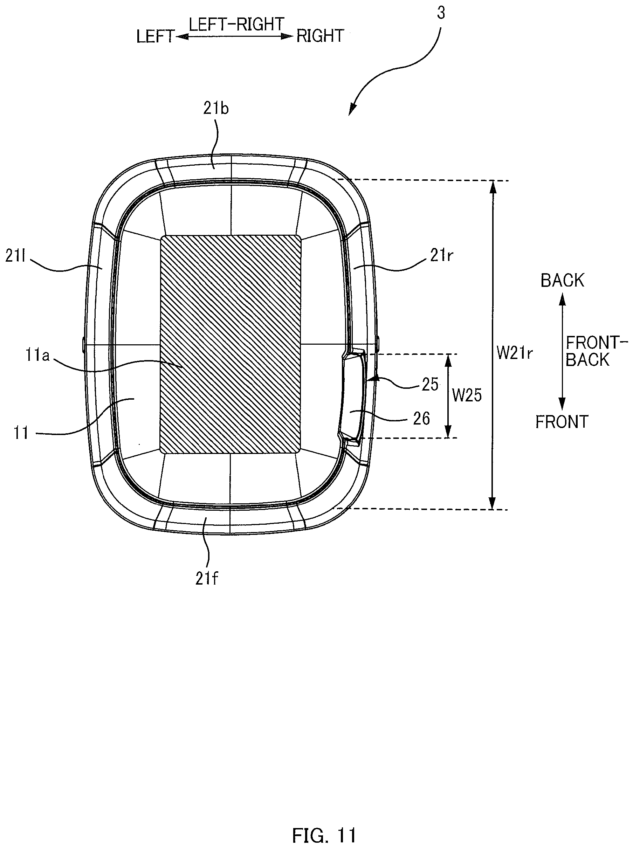

Although the animal litter box 1 in which the entrance/exit (the cutout 25) is provided in the front wall part 21f on the front side in the front-back direction has been described, the location of the entrance/exit is not limited to the front side (or may be the back side) in the front-back direction. For example, the entrance/exit (the cutout 25) may be provided in the left wall part 21r on the right side in the left-right direction, or may be provided in the right wall part 211. FIG. 11 is a diagram illustrating an animal litter box 3 having a cutout 25 in the right wall part 21r as a modified example of the animal litter box 1.

In the animal litter box 3 of the modified example, as shown in FIG. 11, the cutout 25, which is an entrance/exit, is provided in a portion of a long side of a rectangle. More specifically, of the right wall part 21r of the cover part 20, the cutout 25 is provided at a location that is closer than the center in the front-back direction to the front side. The size of the entire animal litter box 3 is approximately twice the size of the animal litter box 1, and is a size on the order of the total size of two animal litters 1 shown in FIG. 1 placed side by side in the left-right direction. In the animal litter box 3, the basic function and configuration of each part (such as the main body part 10 and the cover part 20) other than the disposition of the cutout 25 are substantially the same as those of the animal litter box 1. Therefore, detailed descriptions of each of the parts are not given. Naturally, the direction in which the tray 13 is drawn out and details of, for example, the structure of the urine passage part 11a can be changed.

The animal litter box 3 has a larger overall size than the animal litter box 1 and correspondingly has a wider excrement dischargeable range (a range in which the urine passage part 11a is provided). Therefore, when discharging excrement, an animal such as a cat can avoid a location on which excrement has already been discharged and select a clean location on which excrement has not yet been discharged inside the animal litter box 3. Therefore, the animal easily discharges the excrement without feeling stressed, and, for example, an owner can reduce the frequency with which the animal litter box 3 is cleaned. Since the range in which the absorbent body 200 is installed is also wide, it is possible to increase the absorbent capacity of, for example, urine in terms of the entire toilet. Therefore, it is possible to reduce the frequency with which the absorbent body 200 is exchanged.

Even in such an animal litter box 3, similarly to the animal litter box 1, an extending bottom part 26 and extending side parts 27 extending inward from a peripheral edge of the cutout 25 are formed. Therefore, the animal that has advanced into the animal litter box 3 from the entrance/exit (the cutout 25) is easily guided toward the inner side (the far side in the advancing direction) of the animal litter box 3, and escape of the excrement to the outer side can be effectively suppressed from occurring.

In the animal litter box 3, the entrance/exit (the cutout 25) is provided in a location that is displaced from the center of a long side of the rectangle (the front-back direction of FIG. 11). In other words, in the front-back direction, the center of the cutout 25 is situated at a location that is decentered from the center of the animal litter box 3. In the example of FIG. 11, in the front-back direction of the animal litter box 3, the cutout 25 is provided at a location that is decentered forward of the center. Ordinarily, an animal that uses the animal litter box discharges excrement along a straight line in the advancing direction when the animal enters the toilet from the entrance/exit. Therefore, if the entrance/exit is provided in the center in the longitudinal direction, the animal tends to discharge the excrement in the vicinity of a central region in the longitudinal direction, and, in the central region, the urine absorption amount of the absorbent body 200 immediately reaches a saturated state, as a result of which it becomes necessary to exchange the absorbent body 200 frequently. That is, even if the excrement dischargeable range is wide, the actual discharge region is limited to a narrow range.

In contrast, as in the present modified example, by causing the location of the entrance/exit to be decentered, the animal litter box 3 allows the use of a wider area. For example, in the animal litter box 3 of FIG. 11, first, the animal discharges excrement in a front region in the front-back direction where the entrance/exit (the cutout 25) is provided. When the front region becomes soiled, the animal tries to discharge excrement in a back region in the front-back direction where excrement has not yet been discharged. That is, a place in the vicinity of the entrance where excrement can be easily discharged and a place situated away from the entrance where excrement cannot be easily discharged are used in this order. Therefore, the animal litter box 3 is easily used efficiently over a wide range. Further, the frequency with which the absorbent body 200 is exchanged can be reduced.

As in the animal litter box 3, when the entrance/exit is provided in a portion of a long side of the rectangle, the maximum value of the width of the entrance/exit is desirably 1/2 or less of the maximum value of the width of the wall part where the entrance/exit is provided. Even in the example of FIG. 11, the width W25 of the cutout 25 (the entrance/exit) in the front-back direction is 1/2 or less of width W21r in the front-back direction of the right wall part 21r where the cutout 25 is provided (W21r × 1/2 ≥ W25). As long as such a structure is used, it is possible to restrict the location where the animal advances into the toilet by a certain extent. That is, of the wall part that is elongated in the longitudinal direction, it is possible to allow the animal to enter or exit from desired locations. Therefore, similarly to the above-described case, a place in the vicinity of the entrance where excrement can be easily discharged in the longitudinal direction and a place situated far from the entrance where excrement cannot be easily discharged in the longitudinal direction are easily provided. Therefore, the entire region of the animal litter box 3 is used efficiently.

### Other embodiments

Although the embodiment of the present disclosure have been described hereinabove, the above embodiment of the present disclosure is simply to facilitate understanding of the present disclosure and are not in any way to be construed as limiting the present disclosure. The present disclosure may variously be changed or altered without departing from its gist and encompass equivalents thereof. For example, modified example which will be described below is possible.

In the above-described embodiment, the cutout 25, which is the entrance/exit, is formed in one location among locations on the wall parts 21 that define the cover part 20 in the front-back direction and the left-right direction. However, the number of entrances/exits is not limited to one and may be two or more.

In the above-described embodiment, although a granular excrement treating material, such as cat sand, is placed on the bottom portion of the upper container 10, it is not limited thereto in any way. Reference Signs List

1 animal litter
2 animal litter box (comparative example)
3 animal litter box (modified example)
10 main body part
11 upper container, 11a urine passage part
12 lower container, 12f tray accommodating part
13 tray, 13t gripping part
20 cover part
21 wall part
21f front wall part, 21fet upper end, 21ft reverse part
21b back wall part, 21bt reverse part
21r right wall part, 21rt reverse part
21l left wall part, 21lt reverse part
25 cutout
25eb lower end, 25er right end, 25el left end
26 extending bottom part, 26t extending end, 26tf extending-end bent part
27 extending side part
200 absorbent body
H25 height (cutout), W25 width (cutout)
W21r width (right wall part)

## Claims

1. An animal litter box (1) having a front-back direction, a left-right direction, and a height direction,
the animal litter box comprising:
a main body part (10) that receives excrement of an animal; and
a cover part (20) that is removably mounted to an upper portion of the main body part,
the cover part including wall parts (21) on front-back-direction sides and on left-right-direction sides,
the cover part having an open top at a ceiling,
the cover part having a cutout (25) in at least one location in the wall parts provided on front-back-direction sides and on left-right-direction sides,
the cutout serving as an entrance/exit when the animal enters or exits the animal litter,
the cover part including an extending bottom part (26) that extends inward with respect to the wall part, from a lower end portion (25eb) of the cutout, wherein the extending bottom part (26) includes a bent part (26tf) at an extending end extending toward the inner side, the bent part being bent downward in the height direction,
**characterized in that** the extending bottom part (26) is inclined obliquely downward from an outer side to an inner side of the wall part (21).

2. The animal litter box according to claim 1,
the cover part (20) includes extending side parts (27) that extend inward with respect to the wall part, from two left-right-direction ends of the cutout (25).

3. The animal litter box according to Claim 2, wherein
a width of each of the extending side parts (27) is larger toward a lower side in the height direction.

4. The animal litter box according to any one of Claims 1 to 3, wherein
each wall part includes a reverse part that extends inward with respect to the wall part from a corresponding upper end in the height direction.

5. The animal litter box according to any one of Claims 1 to 4, wherein
a length of the cover part (20) in the front-back direction is longer than a length of the cover part (20) in the left-right direction, and
the cutout (25) is provided in the wall part disposed on a front side or a back side in the front-back direction.

6. The animal litter box according to any one of Claims 1 to 4, wherein
a length of the cover part (20) in the front-back direction is longer than a length of the cover part (20) in the left-right direction, and
the cutout (25) is provided in the wall part disposed on a right side or a left side in the left-right direction.

7. The animal litter box according to Claim 6, wherein
in the front-back direction, a location of a center of the cutout (25) is decentered forward or backward of a location of a center of the animal litter.

8. The animal litter box according to Claim 6 or Claim 7, wherein
in the front-back direction, a maximum value of a width of the cutout (25) is 1/2 or less of a maximum value of a width of the wall part where the cutout (25) is provided.

9. The animal litter box according to any one of Claims 1 to 8, wherein
an extension length from a lower end of the cutout (25) to an extending end of the extending bottom part (26) is between 1 cm to 10 cm (both inclusive).

10. The animal litter box according to any one of Claims 1 to 9, wherein
the extending bottom part (26) is inclined obliquely downward from an outer side to an inner side of the wall part, and
of angles that a straight line connecting a lower end of the cutout (25) and an extending end of the extending bottom part (26) form with a horizontal plane, a smaller angle is between 5 degrees and 45 degrees (both inclusive).

## Patentansprüche

1. Tierstreubehälter (1) mit einer Vorwärts-Rückwärts-Richtung, einer Links-Rechts-Richtung und einer Höhenrichtung,
wobei der Tierstreubehälter Folgendes umfasst:
einen Hauptkörperteil (10), der Exkremente eines Tieres aufnimmt; und
einen Abdeckteil (20), der entfernbar an einem oberen Abschnitt des Hauptkörperteils montiert ist,
wobei der Abdeckteil Wandteile (21) auf Seiten der Vorwärts-Rückwärts-Richtung und auf Seiten der Links-Rechts-Richtung beinhaltet,
wobei der Abdeckteil eine offene Oberseite an einer Decke aufweist,
wobei der Abdeckteil einen Ausschnitt (25) an zumindest einer Stelle in den Wandteilen aufweist, die auf Seiten der Vorwärts-Rückwärts-Richtung und auf Seiten der Links-Rechts-Richtung bereitgestellt sind,
wobei der Ausschnitt als Eingang/Ausgang dient, wenn das Tier das Tierstreu betritt oder verlässt,
wobei der Abdeckteil einen sich erstreckenden Bodenteil (26) beinhaltet, der sich nach innen in Bezug auf den Wandteil von einem unteren Endabschnitt (25eb) des Ausschnittes erstreckt, wobei der sich erstreckende Bodenteil (26) einen gebogenen Teil (26tf) an einem sich erstreckenden Ende beinhaltet, das sich zu der Innenseite erstreckt, wobei der gebogene Teil nach unten in der Höhenrichtung gebogen ist,
**dadurch gekennzeichnet, dass** der sich erstreckende Bodenteil (26) schräg nach unten von einer Außenseite zu einer Innenseite des Wandteils (21) geneigt ist.

2. Tierstreubehälter nach Anspruch 1, wobei der Abdeckteil (20) sich erstreckende Seitenteile (27) beinhaltet, die sich nach innen in Bezug auf den Wandteil von zwei Enden der Links-Rechts-Richtung des Ausschnittes (25) erstrecken.

3. Tierstreubehälter nach Anspruch 2, wobei
eine Breite von jedem der sich erstreckenden Seitenteile (27) größer zu einer unteren Seite in der Höhenrichtung ist.

4. Tierstreubehälter nach einem der Ansprüche 1 bis 3, wobei
jeder Wandteil einen Umkehrteil beinhaltet, der sich nach innen in Bezug auf den Wandteil von einem entsprechenden oberen Ende in der Höhenrichtung erstreckt.

5. Tierstreubehälter nach einem der Ansprüche 1 bis 4, wobei eine Länge des Abdeckteils (20) in der Vorwärts-Rückwärts-Richtung länger als eine Länge des Abdeckteils (20) in der Links-Rechts-Richtung ist, und
der Ausschnitt (25) in dem Wandteil bereitgestellt ist, der an einer Vorderseite oder einer Rückseite in der Vorwärts-Rückwärts-Richtung vorgesehen ist.

6. Tierstreubehälter nach einem der Ansprüche 1 bis 4, wobei eine Länge des Abdeckteils (20) in der Vorwärts-Rückwärts-Richtung länger als eine Länge des Abdeckteils (20) in der Links-Rechts-Richtung ist, und
der Ausschnitt (25) in dem Wandteil bereitgestellt ist, der an einer rechten Seite oder einer linken Seite in der Links-Rechts-Richtung vorgesehen ist.

7. Tierstreubehälter nach Anspruch 6, wobei
in der Vorwärts-Rückwärts-Richtung eine Stelle einer Mitte des Ausschnittes (25) vorwärts oder rückwärts einer Stelle einer Mitte des Tierstreus dezentriert ist.

8. Tierstreubehälter nach Anspruch 6 oder Anspruch 7, wobei
in der Vorwärts-Rückwärts-Richtung ein Höchstwert einer Breite des Ausschnittes (25) 1/2 oder weniger eines Höchstwertes einer Breite des Wandteils ist, wo der Ausschnitt (25) bereitgestellt ist.

9. Tierstreubehälter nach einem der Ansprüche 1 bis 8, wobei
eine Erstreckungslänge von einem unteren Ende des Ausschnittes (25) zu einem Erstreckungsende des sich erstreckenden Bodenteils (26) zwischen 1 cm und 10 cm (beides inklusive) ist.

10. Tierstreubehälter nach einem der Ansprüche 1 bis 9,wobei
der sich erstreckende Bodenteil (26) schräg nach unten von einer Außenseite zu einer Innenseite des Wandteils geneigt ist, und
von Winkeln, die eine gerade Linie, die ein unteres Ende des Ausschnittes (25) und ein sich erstreckendes Ende des sich erstreckenden Bodenteils (26) verbindet, mit einer horizontalen Ebene bilden, ein kleinerer Winkel zwischen 5 Grad und 45 Grad (beides inklusive) ist.

## Revendications

1. Bac à litière pour animaux (1) ayant une direction avant-arrière, une direction gauche-droite et une direction en hauteur, le bac à litière pour animaux comprenant :
une partie de corps principal (10) qui reçoit des excréments d'un animal ; et
une partie de couvercle (20) qui est montée de manière amovible sur une partie supérieure de la partie de corps principal,
la partie de couvercle comprenant des parties de paroi (21) sur des côtés avant-arrière et sur des côtés gauche-droite,
la partie de couvercle ayant un sommet ouvert au niveau d'un plafond,
la partie de couvercle ayant une découpe (25) à au moins un emplacement dans les parties de paroi prévues sur des côtés avant-arrière et sur des côtés gauche-droite,
la découpe servant d'entrée/sortie lorsque l'animal entre ou sort de la litière pour animaux,
la partie de couvercle comprenant une partie inférieure extensible (26) qui s'étend vers l'intérieur par rapport à la partie de paroi, à partir d'une partie d'extrémité inférieure (25eb) de la découpe, dans lequel la partie inférieure extensible (26) comprend une partie courbée (26tf) au niveau d'une extrémité extensible s'étendant vers le côté intérieur, la partie courbée étant courbée vers le bas dans la direction en hauteur, **caractérisé en ce que**
la partie inférieure extensible (26) est inclinée obliquement vers le bas depuis un côté extérieur vers un côté intérieur de la partie de paroi (21).

2. Bac à litière pour animaux selon la revendication 1,
la partie de couvercle (20) comprend des parties latérales extensibles (27) qui s'étendent vers l'intérieur par rapport à la partie de paroi, à partir de deux extrémités dans la direction gauche-droite de la découpe (25).

3. Bac à litière pour animaux selon la revendication 2, dans lequel
une largeur de chacune des parties latérales extensibles (27) est plus grande vers un côté inférieur dans la direction de la hauteur.

4. Bac à litière pour animaux selon l'une quelconque des revendications 1 à 3, dans lequel
chaque partie de paroi comprend une partie inversée qui s'étend vers l'intérieur par rapport à la partie de paroi à partir d'une extrémité supérieure correspondante dans la direction en hauteur.

5. Bac à litière pour animaux selon l'une quelconque des revendications 1 à 4, dans lequel
une longueur de la partie de couvercle (20) dans la direction avant-arrière est plus longue qu'une longueur de la partie de couvercle (20) dans la direction gauche-droite, et
la découpe (25) est prévue dans la partie de paroi sur un côté avant ou sur un côté arrière dans la direction avant-arrière.

6. Bac à litière pour animaux selon l'une quelconque des revendications 1 à 4, dans lequel
une longueur de la partie de couvercle (20) dans la direction avant-arrière est plus longue qu'une longueur de la partie de couvercle (20) dans la direction gauche-droite, et
la découpe (25) est prévue dans la partie de paroi disposée sur un côté droit ou sur un côté gauche dans la direction gauche-droite.

7. Bac à litière pour animaux selon la revendication 6,
dans lequel dans la direction avant-arrière, un emplacement d'un centre de la découpe (25) est décentré vers l'avant ou vers l'arrière par rapport à un emplacement d'un centre de la litière pour animaux.

8. Bac à litière pour animaux selon la revendication 6 ou la revendication 7, dans lequel
dans la direction avant-arrière, une valeur maximale d'une largeur de la découpe (25) est égale ou inférieure à la moitié d'une valeur maximale d'une largeur de la partie de paroi où la découpe (25) est prévue.

9. Bac à litière pour animaux selon l'une quelconque des revendications 1 à 8, dans lequel
une longueur d'extension depuis une extrémité inférieure de la découpe (25) jusqu'à une extrémité extensible de la partie inférieure extensible (26) est comprise entre 1 cm et 10 cm (les deux compris).

10. Bac à litière pour animaux selon l'une quelconque des revendications 1 à 9, dans lequel
la partie inférieure extensible (26) est inclinée obliquement vers le bas depuis un côté extérieur vers un côté intérieur de la partie de paroi, et
des angles qu'une ligne droite reliant une extrémité inférieure de la découpe (25) et une extrémité extensible de la partie inférieure extensible (26) forment avec un plan horizontal, un angle plus petit est compris entre 5 degrés et 45 degrés (les deux compris).
